# EUROPÄISCHE PATENTANMELDUNG

(11) **EP 1 037 038 A1**
(43) Veröffentlichungstag der Anmeldung: **20.09.2000**
(21) Anmeldenummer: 00104797.6
(22) Anmeldetag: 06.03.2000
(51) Int. Cl.: G01N 27/12

(54) **Verfahren und Vorrichtung zur Messung der Taupunkttemperatur**

(30) Priorität: 13.03.1999 DE 19911293
(71) Anmelder: Schultheis, Peter, Dr., 98693 Manebach (DE); Beinhorn, Joachim, Dipl.-Ing., 37127 Niemetal (DE); Heinze, Dirk, Prof.Dr.-Ing.habil., 98693 Ilmenau (DE); Weick, Hans-Joachim, Dipl.-Ing., 98704 Langewiesen (DE); Welsch, Steffen, 98701 Neustadt/Rstg. (DE)
(72) Erfinder: Schultheis, Peter, Dr., 98693 Manebach (DE); Beinhorn, Joachim, Dipl.-Ing., 37127 Niemetal (DE); Heinze, Dirk, Prof.Dr.-Ing.habil., 98693 Ilmenau (DE); Weick, Hans-Joachim, Dipl.-Ing., 98704 Langewiesen (DE); Welsch, Steffen, 98701 Neustadt/Rstg. (DE)
(74) Vertreter: Liedtke, Klaus, Dr.

(57) **Zusammenfassung**

Der Erfindung liegt die Aufgabe zugrunde, ein Verfahren und eine Vorrichtung so zu verbessern, daß eine Erhöhung der Meßgenauigkeit und Verringerung der Heizenergie sowie die Erfassung des aktuellen Systemzustandes ermöglicht wird.

Erfindungsgemäß gelingt die Lösung der Aufgabe dadurch, daß ein Homogenisieren der Temperaturverteilung im Sensorelement durch stärkeres Beheizen der Ränder der Heizschicht erfolgt.

Die Erfindung betrifft ein Verfahren zur Messung der Taupunkttemperatur, bei dem mit einem Sensorelement die Meßwerte ermittelt werden, indem eine gesättigte Salzlösung auf dem Sensorelement durch Heizen mittels einer von der Detektionsschicht elektrisch getrennten Heizschicht auf eine Temperatur gebracht wird, bei der der Wasserdampfpartitialdruck über der Salzlösung mit dem der Umgebung übereinstimmt.

## Beschreibung

Die Erfindung betrifft ein Verfahren zur Messung der Taupunkttemperatur, bei dem mit einem Sensorelement die Meßwerte ermittelt werden, indem eine gesättigte Salzlösung auf dem Sensorelement durch Heizen mittels einer von der Detektionsschicht elektrisch getrennten Heizschicht auf eine Temperatur gebracht wird, bei der der Wasserdampfpartialdruck über der Salzlösung mit dem der Umgebung übereinstimmt.

Im Stand der Technik ist es bekannt, Messungen der Taupunkttemperatur nach dem Prinzip des indirekten Beheizens von Sensorelementen auf eine Gleichgewichtstemperatur durchzuführen.

In EP 0 482 482 A1 wird eine Vorrichtung beschrieben, in der mittels eines aufwendigen Aufbaus das Beheizen des Sensorelementes klassischer Bauweise (Glasträgerrohr, Glasfaserstrumpf zur Aufnahme des Elektrolyten, gewickelte Elektroden) aus einem gewissen Abstand von diesem durch Wärmestrahlung erfolgt. Dazu ist die Erzeugung hoher Temperaturen mit einer entsprechend großen Heizleistung erforderlich. Hoher Energiebedarf steht den aktuellen Forderungen der Anwender, insbesondere der klimatologischen Meßtechnik, entgegen. Desweiteren ermöglicht der Aufbau des Sensorelementes und die damit verbundenen Streuungen von dessen technischen Parametern keine Austauschbarkeit des Sensorelementes. Eine Erfassung des aktuellen Systemzustandes ist mit diesem System nicht möglich. Um festzustellen, wann das Sensorelement regeneriert bzw. ausgetauscht werden muß, ist eine personalaufwendige Vergleichsmessung mit einem Referenzsystem notwendig.

Die dynamischen Eigenschaften des Systems sind vor allem aufgrund des im Vergleich zu kleinen planaren Strukturen massereichen Aufbaus des Sensorelements und den thermischen Eigenschaften des Glasträgerrohres und der damit verbundenen großen Trägheit des Systems zur Ermittlung kurzfristiger Taupunktänderungen nicht geeignet.

Nach DE 34 09 401 A1 ist eine Vorrichtung bekannt, bei der eine Feuchtefühlschicht und eine Heizschicht auf einem Substrat aufgebracht sind und sich auf einem weiteren Substrat eine Temperaturmeßschicht befindet. Beide Substrate sind sandwichartig miteinander verbunden. nachteilig ist dabei, daß die Temperaturmessung in einer anderen Ebene als der der Feuchtefühlschicht und der Heizschicht erfolgt. Da die Heizschicht im Arbeitspunkt immer eine gegenüber der Umgebungstemperatur deutlich erhöhte Temperatur aufweist, entsteht zwischen Heizschicht und Umgebung ein Temperaturgradient, der von der Umgebungstemperatur, der Taupunkttemperatur und der Strömungsgeschwindigkeit des Meßmediums abhängt. Durch diese Anordnung der Temperaturmeßschicht erfolgt die Temperaturmessung an dem von der eigentlich gewünschten Meßstelle, der Feuchtefühlschicht, am weitesten entfernten Ort, so daß der oben beschriebene Temperaturgradient vollständig die Meßgenauigkeit beeinflußt. Damit entsteht ein von mehreren Größen abhängiger, durch den technologischen Aufbau bedingter Meßfehler. Eine Erfassung des Systemzustandes ist damit nicht möglich.

Der Erfindung liegt die Aufgabe zugrunde, ein Verfahren und eine Vorrichtung der eingangs genannten Art so zu verbessern, daß eine Erhöhung der Meßgenauigkeit und Verringerung der Heizenergie sowie die Erfassung des aktuellen Systemzustandes ermöglicht wird.

Erfindungsgemäß wird die Aufgabe mit den im Patentanspruch 1 angegebenen kennzeichnenden Merkmalen gelöst.

Vorteilhafte Ausgestaltungen der erfindungsgemäßen Vorrichtung sowie Verfahren sind in den zugehörigen Unteransprüchen angegeben.

Die vorliegende Erfindung zeichnet sich durch den Vorteil aus, daß durch die Integration der Temperaturmeßschicht in die Ebene der Heizschicht der Meßort für die Temperaturmessung sehr nahe an den gewünschten Meßort der Detektionsschicht gebracht wird und dadurch der Einfluß von Störgrößen verringert wird. Durch die isolierende Abdeckung von Heiz-Temperaturmeßschicht wird der Temperaturgradient zwischen Heizschicht und Umgebung stark reduziert, was ebenfalls zur Erhöhung der Meßgenauigkeit beiträgt. Weiterhin wird die benötigte Heizenergie in starkem Maße reduziert.

Mit der erfindungsgemäßen Vorrichtung wird eine gesättigte Salzlösung auf dem Sensorelement durch Heizen mittels einer von der Detektionsschicht elektrisch getrennten Heizschicht auf eine Temperatur gebracht, bei der der Wasserdampfpartialdruck über der Salzlösung mit dem der Umgebung übereinstimmt. Die sich einstellende Gleichgewichtstemperatur ist ein Maß für den Wasserdampfgehalt der Umgebung des Sensorelementes. Aus der mittels Temperaturmeßschicht ermittelten Gleichgewichtstemperatur können insbesondere die Tautemperatur, aber auch andere Feuchtekenngrößen berechnet werden. Die Einstellung der Gleichgewichtstemperatur erfolgt über einen Regler, wobei die Regelgröße der wasserdampfpartialdruckabhängige Widerstand bzw. Leitwert der Salzlösung ist.

Die Erfindung wird im folgenden anhand eines Ausführungsbeispieles näher erläutert. In der Zeichnung zeigen:
- Figur 1: den Aufbau des Sensors von der Vorderseite,
- Figur 2: den Aufbau des Sensors von der Rückseite
und
- Figur 3: den Sensor in der Seitenansicht geschnitten.

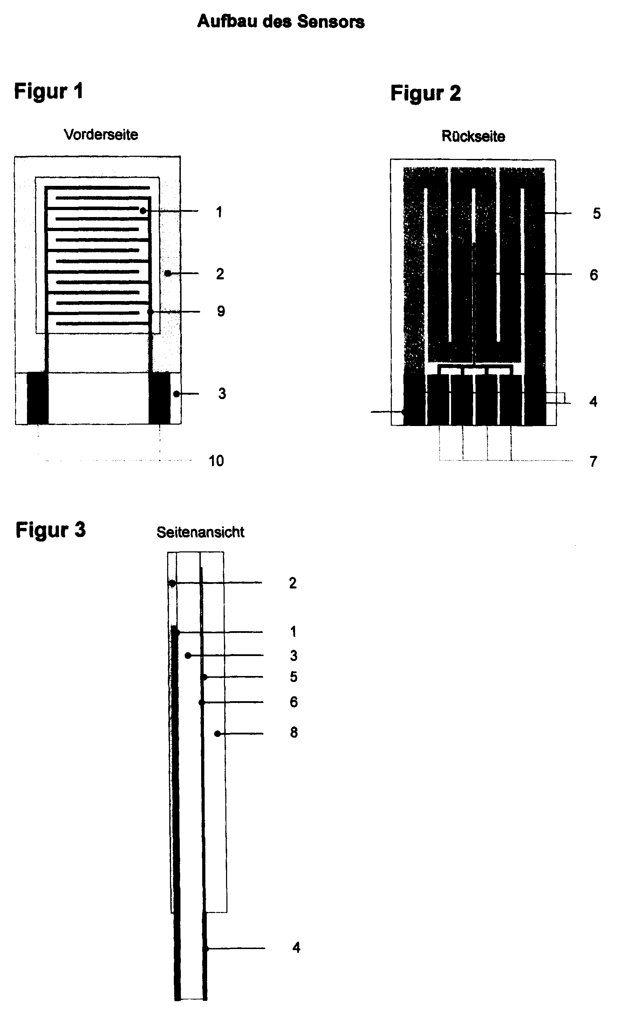

In Figur 1 ist der vorderseitige Aufbau des Sensors dargestellt. Auf dem Trägersubstrat 3 ist die Detektionsschicht 1 aufgebracht und durch eine Glasabdeckung 2 geschützt. Unter der Glasabdeckung 2 ist auf der Detektionsschicht 1 das Sensorelement 9, eingebettet in eine gesättigte Salzlösung, aufgebracht. Außerhalb der Glasabdeckung 2 befinden sich auf dem Trägersubstrat 3 die Sensoranschlüsse 10.

Figur 2 zeigt den rückseitigen Aufbau des Sensors. Auf der Rück- bzw. Unterseite sind die Heizschicht 5 sowie die Temperaturmeßschicht aufgebracht und mit einer Isolierabdeckung 8 versehen. Zwischen den Elektroanschlüssen 4 für die Heizschicht 5 sind vier Anschlußpunkte für die Temperaturmessung 7 angeordnet.

Die Figur 3 stellt den Sensor in geschnittener Seitenansicht dar.

Das Beheizen der Detektionsschicht 1 erfolgt indirekt durch eine mäanderförmige Heizschicht 5, die über Wärmeleitung in direktem thermischen Kontakt zur Detektionsschicht 1 steht, aber von dieser elektrisch getrennt ist. Voraussetzung für das Erzielen einer hohen Meßgenauigkeit für die Taupunkttemperatur ist die gleichmäßige Beheizung der Detektionsschicht 1. Dieses wird dadurch erreicht, daß die Heizschicht 5 geometrisch größer als die Detektionsschicht 1, ausgeführt ist. Die Heizschicht 5 ist so dimensioniert, daß der stärkere Temperaturabfall an den Rändern des Sensorelementes 9 durch eine stärkere Beheizung an diesen Rändern ausgeglichen wird. Das sehr gut wärmeleitende Trägersubstrat 3 bewirkt eine Homogenisierung der Temperaturverteilung

Die Heizschicht 5 und die Temperaturmeßschicht 6 sind mit einer schlecht wärmeleitenden Abdeckung 8 versehen. Durch diese isolierende Abdeckung 8 wird der Temperaturgradient zur Umgebung, der eine wesentliche Fehlerquelle für die Gleichgewichtstemperaturmessung darstellt, stark reduziert. Gleichzeitig wird auch die Heizleistung durch Verringerung der konvektiven Wärmeabgabe der Heizschicht 3 an die Umgebung stark reduziert.

Die Temperaturmessung erfolgt mittels der Temperaturmeßschicht 6, die sich auf der gleichen Ebene wie die Heizschicht 5 befindet und damit ebenfalls über Wärmeleitung im direkten thermischen Kontakt mit der Detektionsschicht 1 steht.

Während des Meßbetriebes verändert sich die Kennlinie des Sensorelementes 9. Dadurch entstehen immer größer werdende Meßfehler, die bei Erreichen eines bestimmten Wertes die Regenerierung bzw. das Austauschen des Sensorelementes 9 erfordern. Durch die mikrorechnergesteuerte Elektronik ist es möglich, in beliebig festlegbaren Abständen automatisch die Veränderung der Kennlinie zu erfassen, den Idealzustand zu bestimmen, Veränderungen der Kennlinien in gewissen Grenzen zu kompensieren und den Zeitpunkt zum Regenerieren bzw. Austauschen des Sensorelementes 9 zu erkennen. besonders vorteilhaft ist dabei, daß eine Unterbrechung des Meßvorganges nicht erforderlich ist.
Die Realisierung dieser Maßnahmen gelingt durch definiertes Regeln auf einen festgelegten Arbeitspunkt der Sensorkennlinie mit möglichst geringer bleibender Regelabweichung. Das ist durch den I-Anteil des Reglers gewährleistet. Es besteht dabei die Möglichkeit, den Arbeitspunkt während des Meßvorganges mittels Mikrorechner um definierte Beträge zu verschieben. Durch wird eine Erhöhung der Meßgenauigkeit der Vorrichtung sowie die Lebensdauer des Sensorelementes 9 erreicht.

### Bezugszeichenliste

- 1: Detektionsschicht
- 2: Glasabdeckung
- 3: Trägersubstrat
- 4: Elektroanschluß (Spannungszuführung)
- 5: Heizschicht
- 6: Temperaturmeßschicht
- 7: Anschlußpunkte für Temperaturmessung
- 8: Isolierabdeckung
- 9: Sensorelement
- 10: Sensoranschluß

## Patentansprüche

1. Verfahren zur Messung der Taupunkttemperatur, bei dem mit einem Sensorelement die Meßwerte ermittelt werden, indem eine gesättigte Salzlösung auf dem Sensorelement durch Heizen mittels einer von der Detektionsschicht elektrisch getrennten Heizschicht auf eine Temperatur gebracht wird, bei der der Wasserdampfpartialdruck über der Salzlösung mit dem der Umgebung übereinstimmt, **dadurch gekennzeichnet**, daß ein Homogenisieren der Temperaturverteilung im Sensorelement durch stärkeres Beheizen der Ränder der Heizschicht erfolgt.

2. Verfahren nach Anspruch 1, **dadurch gekennzeichnet**, daß Veränderungen der Sensorkennlinien durch eine elektronische Auswerteeinheit erfaßt und zeitweise kompensiert werden, wobei die Auswerteeinheit erkennt, wenn die Systemparameter zu stark vom Sollzustand abweichen und ein auswertbares Signal für einen Sensorwechsel abgibt.

3. Vorrichtung zur Messung der Taupunkttemperatur, bestehend aus einem Sensorelement mit Detektions-, Heiz- und Temperaturmeßschicht, bei der sich auf dem Trägersubstrat eine Detektionsschicht aus gesättigter Salzlösung befindet und unterhalb des Trägersubstrates eine Heiz- und eine Temperaturmeßschicht in einer Ebene angebracht ist, **dadurch gekennzeichnet**, daß die Fläche der Heizschicht größer als die Fläche der Detektionsschicht ausgeführt ist, so daß die Projektion der Fläche der Heizschicht auf die Fläche der Detektionsschicht allseitig die Detektionsschicht überragt.
